(19) **Europäisches Patentamt / European Patent Office / Office européen des brevets**

(11) **EP 1 356 455 B1**

(12) **FASCICULE DE BREVET EUROPEEN**

(45) Date de publication et mention de la délivrance du brevet:
**12.12.2007 Bulletin 2007/50**

(21) Numéro de dépôt: **02701358.0**

(22) Date de dépôt: **31.01.2002**

(51) Int Cl.:
*G10L 19/00* (2006.01)     *H04M 3/56* (2006.01)
*H04L 1/20* (2006.01)

(86) Numéro de dépôt international:
**PCT/FR2002/000366**

(87) Numéro de publication internationale:
**WO 2002/063609 (15.08.2002 Gazette 2002/33)**

(54) **METHODE ET DISPOSITIF DE TRAITEMENT D'UNE PLURALITE DE FLUX BINAIRES AUDIO**

VERFAHREN UND VORRICHTUNG ZUR VERARBEITUNG VON MEHREREN AUDIOBITSTRÖMEN

METHOD AND DEVICE FOR PROCESSING NUMEROUS AUDIO BINARY STREAMS

(84) Etats contractants désignés:
**DE ES GB IT**

(30) Priorité: **02.02.2001 FR 0101662**

(43) Date de publication de la demande:
**29.10.2003 Bulletin 2003/44**

(73) Titulaire: **FRANCE TELECOM**
**75015 Paris (FR)**

(72) Inventeurs:
- **BENJELLOUN TOUIMI, Abdellatif**
  **F-22560 Trebeurden (FR)**
- **BOISSEAU, Cédric**
  **F-77250 Moret sur Loing (FR)**
- **LAMBLIN, Claude**
  **F-22700 Perros-Guirec (FR)**
- **BOUTEILLE, Franck**
  **F-22300 LANNION (FR)**
- **DELEAM, David**
  **F-22700 Perros Guirec (FR)**
- **PATARD, Roland**
  **F-22700 LOUANNEC (FR)**

(74) Mandataire: **Maillet, Alain**
**Cabinet le Guen & Maillet,**
**5, Place Newquay,**
**B.P. 70250**
**35802 Dinard Cedex (FR)**

(56) Documents cités:
**US-A- 5 570 363**     **US-A- 6 006 173**

- **BENJELLOUN TOUIMI A ET AL: "A SUMMATION ALGORITHM FOR MPEG-1 CODED AUDIO SIGNALS: A FIRST STEP TOWARDS AUDIO PROCESSED DOMAIN UN ALGORITHME DE SOMMATION DES SIGNAUX AUDIO CODES MPEG-1: PREMIEREETAPE VERS LE TRAITEMENT AUDIO DANS LE DOMAINE COMPRESSE" ANNALES DES TELECOMMUNICATIONS - ANNALS OF TELECOMMUNICATIONS, PRESSES POLYTECHNIQUES ET UNIVERSITAIRES ROMANDES, LAUSANNE, CH, vol. 55, no. 3/4, mars 2000 (2000-03), pages 108-116, XP000948703 ISSN: 0003-4347**
- **FOO S ET AL: "ENHANCING THE QUALITY OF LOW BIT-RATE REAL-TIME INTERNET COMMUNICATIO SERVICES" INTERNET RESEARCH: ELECTRONIC NETWORKING APPLICATIONS AND POLICY, XX, XX, vol. 9, no. 3, 1999, pages 212-224, XP000901290 ISSN: 1066-2243**

## Description

La présente invention concerne de manière générale une méthode et un dispositif de traitement de signal audio. Plus précisément, la présente invention a trait à une méthode et un dispositif de traitement d'une pluralité de flux binaires audio pouvant présenter des discontinuités. La présente invention trouve plus particulièrement application dans le domaine de la téléconférence.

On appellera par la suite flux binaire audio ou plus brièvement flux audio toute séquence de trames audio telles que celles fournies par un codeur de source audio. Ce flux binaire est en général acheminé à travers un réseau avant d'être décodé dans un récepteur audio, permettant ainsi la reproduction du signal de la source audio.

La qualité des réseaux de transmission et le type d'émetteurs étant indépendants de la conception des récepteurs, il se peut que des données d'un flux audio soient absentes au moment où celles-ci doivent être décodées et où le signal correspondant doit être reproduit. Il se produit alors d'une discontinuité dans le flux audio reçu. Le problème se pose de manière particulièrement aiguë dans les équipements chargés de traiter plusieurs flux audio comme les ponts de téléconférence, les passerelles ou encore les terminaux de téléconférence. Ces équipements doivent être capables de gérer plusieurs flux pouvant provenir de codeurs de types différents et susceptibles d'avoir transité par des réseaux hétérogènes, synchrones (RNIS, RTC,..) ou asynchrones (IP, ATM, Frame Relay...).

De manière générale, une discontinuité dans un flux audio peut être due à la perte d'une partie des données du flux audio, à la gigue et/ou un asynchronisme entre le récepteur et l'émetteur ou encore à une émission discontinue de l'émetteur. Nous envisagerons successivement les trois situations précitées.

La perte d'une partie du flux audio correspond généralement à une perte d'une ou de plusieurs trames, la longueur des trames étant dépendante du codage et du mode de transmission spécifique à chaque réseau. Par exemple, dans un réseau à commutation de paquets (cas des réseaux IP) la qualité de service n'est généralement pas garantie. Le réseau n'assure aucun seuil minimal sur le débit binaire offert pour le transport des paquets. La bande passante disponible dépend des conditions du trafic sur le réseau. Ainsi, dans le cas de forte congestion, la fluidité de transmission n'est plus possible. Un dépassement des mémoires tampons des routeurs peut donc survenir et certains paquets peuvent être rejetés.

La gigue correspond à la variation du délai de transmission entre l'équipement émetteur et l'équipement récepteur. Le flux audio devant être traité ou reproduit de façon continue, cette variation de délai peut entraîner l'absence de données au moment requis par le récepteur. Cette absence peut être également due à l'asynchronisme entre le récepteur et l'émetteur, par exemple, lorsque l'horloge de l'émetteur a une fréquence plus faible que celle du récepteur.

Certains émetteurs audio intègrent un système de compression des silences associé à un mécanisme d'émission discontinue pour réduire le débit transmis pendant les intervalles de silence et ainsi préserver la bande passante allouée à la communication. Ces systèmes sont basés sur une structure VAD/DTX/CNG (Voice Activity Detector / Discontinuous Transmission / Comfort Noise Generator). Du côté émetteur, un détecteur d'activité vocale (VAD) classifie chaque trame comme active ou non active. En cas de trame non active, un module de transmission discontinue décide, soit de prolonger l'activité vocale ("hangover") pour éviter une coupure trop brutale à la fin d'une période active, soit d'envoyer ou non une trame SID (Silence Insertion Descriptor). Cette trame SID contient des informations codées décrivant les caractéristiques du bruit de fond pour permettre l'insertion au récepteur de bruit artificiel pendant les périodes d'inactivité. Selon le cas, les caractéristiques du bruit de fond peuvent être ou non mises à jour pendant la période d'inactivité vocale. La fréquence de mise à jour (émission de trames de SID) dépend aussi du système de transmission discontinue DTX : certains DTX envoient une trame SID à intervalles réguliers (GSM), d'autres n'émettent une trame SID que lorsque le spectre de puissance de bruit a changé (UIT-T G.723.1). Lorsque le système ne met pas à jour les caractéristiques du bruit de fond, l'information de fin de période d'activité vocale peut être indiquée ou non dans la dernière trame émise. Enfin certains émetteurs audio, fonctionnant en mode DTX ne transmettent ni trame SID ni ne fournissent une information de fin de période d'activité vocale. Le récepteur doit être alors capable de détecter, en analysant les flux reçus, l'absence d'activité vocale.

Le cas où une information SID est effectivement transmise est le seul cas où le récepteur connaît la cause probable de la discontinuité du flux audio. Dans les autres cas (perte, gigue, émission discontinue sans envoi d'information SID), le récepteur ne connaît pas la cause de la discontinuité au moment où il doit traiter ou reproduire le signal correspondant. Certains protocoles permettent néanmoins, lors de la reprise de réception, de savoir si la discontinuité était due à une perte de paquets, à la gigue ou à une émission discontinue. Par exemple, le protocole RTP (Real time Transport Protocol) contient dans son en-tête de "contrôle" un numéro de séquence et une estampille temporelle (Time Stamp). L'examen des informations auxiliaires des paquets reçus de part et d'autre de la discontinuité permet d'identifier la cause de cette dernière. Des numéros de séquence non consécutifs indiquent que la discontinuité est probablement due à une perte de paquets (sauf présence de gigue importante). Les instants de génération de données fournis par les estampilles permettent de faire la distinction entre gigue et discontinuité de l'émission.

Plusieurs solutions ont été apportées dans l'état de la technique pour remédier au problème posé par une discontinuité dans un flux audio.

Une solution triviale est de ne pas régénérer les trames manquantes au prix d'une dégradation importante de qualité du signal sonore restitué se traduisant par des craquements rendant la compréhension de la parole difficile et l'écoute de la musique désagréable.

D'autres solutions consistent à régénérer toutes les trames manquantes.

Ainsi, lorsque la discontinuité de flux est due à une perte de paquets IP, l'article de C. Perkins et al. intitulé « A survey of packet loss recovery techniques for streaming audio », publié dans IEEE Network, Sept.-Oct. 1998, donne un aperçu des techniques de régénération existantes.

De manière plus générale, lorsqu'un flux audio présente, à sa réception, une discontinuité suite à une perte de paquets ou à une gigue importante dans le réseau de transmission, il est connu de régénérer les données perdues ou excessivement retardées, soit en faisant appel à l'émetteur et/ou à des noeuds intermédiaires du réseau, soit directement au niveau du récepteur. Parmi les méthodes relevant du premier type on peut notamment citer celle proposée par Yao et al. dans l'article intitulé « Experiment with error-correcting RTP gateways » publié dans IEEE 3rd Workshop on Multimedia Signal Processing, pages 15-20 procédant par correction d'erreurs FEC (Forward Error Correction) et requêtes en répétition automatique (ARQ) à des noeuds intermédiaires du réseau. Cette technique présente toutefois l'inconvénient de nécessiter une information redondante de détection/correction d'erreurs et donc de mobiliser des ressources de transmission supplémentaires. Les méthodes de régénération mises en oeuvre au niveau du récepteur peuvent procéder par interpolation entre les signaux décodés précédant et suivant la discontinuité, ou encore par synthèse à partir d'une estimation des paramètres du codeur. Ces dernières méthodes supposent que le dispositif de régénération connaisse l'algorithme de codage.

Si la discontinuité du flux reçu a pour origine un silence d'émission, les méthodes de régénération les plus courantes font appel à la génération de bruit de confort à partir d'une information décrivant les caractéristiques du bruit de fond (SID). Elles peuvent dépendre du type de codec utilisé (UIT-T G.723.1, UIT-T G.729, codeurs GSM) ou être indépendantes de ce dernier (appendice II de G.711).

L'implémentation des techniques de régénération décrites ci-dessus accroît la complexité des dispositifs de traitement audio et plus particulièrement des dispositifs de traitement multi-flux. En outre, la régénération systématique de tous les flux non reçus entraîne non seulement une augmentation de la complexité mais elle risque aussi de détériorer la qualité si le codeur est peu performant pour des signaux multi-sources ou s'il résiste mal aux cascades de transcodage. C'est notamment le cas lorsque le codage utilisé est du type CELP (Code Excited Linear Predictive) à faible débit.

De manière générale, un dispositif de traitement multi-flux reçoit une pluralité de flux binaires audio, issus par exemple de sources différentes, et produit un ou plusieurs flux audio de sortie à partir des flux d'entrée. Le traitement effectué par un tel dispositif peut être, de manière non limitative, une opération de mixage ou de multiplexage dans le domaine codé ou non, une opération de décodage, de transcodage ou encore une combinaison des opérations précédemment citées, voir par exemple le document JP11284582.

Nous présenterons ci-après deux exemples de dispositif de traitement multi-flux utilisés dans le domaine de la téléconférence à savoir un pont audio et un terminal audio.

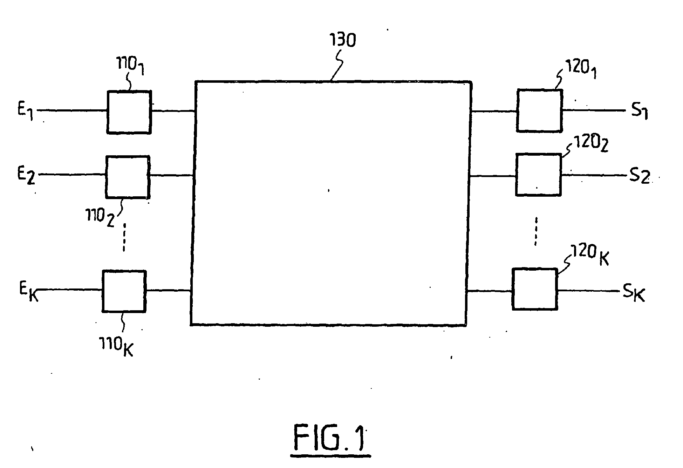

Dans le contexte de la téléconférence utilisant une architecture centralisée, l'unité de contrôle multipoint (MCU), encore appelée pont audio, effectue la combinaison (ou mixage) d'une pluralité de flux audio puis le routage vers les terminaux concernés. La Fig. 1 illustre un tel pont audio. A partir de K flux audio d'entrée reçus $E_1,..E_K$, le pont fournit $K$ flux audio de sortie $S_1,..,S_K$ par combinaison des flux d'entrée dans le module (130). Pour un indice de sortie $m$ donné, la somme des $(K-1)$ flux d'entrée $(E_p)$, $p \neq m$ est dirigée vers la sortie $Sm$. Préalablement à leur combinaison, les flux d'entrée sont décodés ou partiellement décodés dans les décodeurs $110_1$, $110_2$,..$110_K$. Réciproquement, les flux de sortie subissent un recodage ou un recodage partiel dans les codeurs $120_1$,$120_2$,...$120_K$. Les flux d'entrée $E_p$ sont constitués de trames de données audio codées.

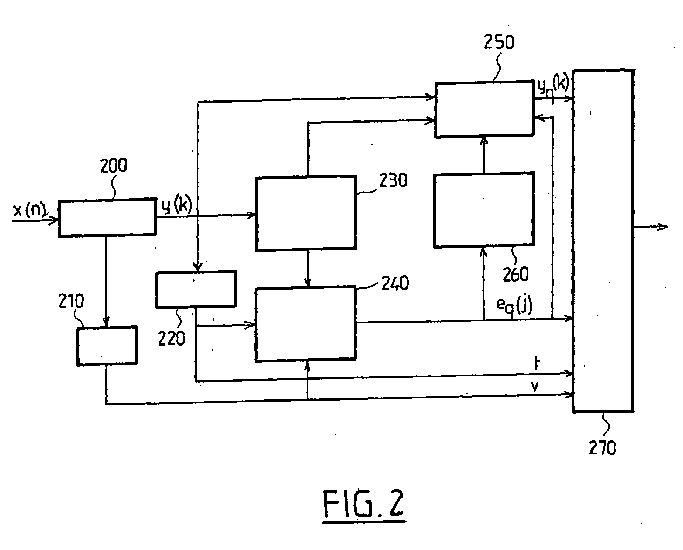

Le codage utilisé peut être un codage perceptuel effectuant une transformée en cosinus discrète modifiée (TCDM) sur les trames numériques du signal audio suivie d'une quantification des composantes fréquentielles obtenues avec allocation dynamique de bits en fonction des niveaux de masquage par sous-bandes. Un codeur perceptuel basé sur ce principe, le codeur TDAC de FT R&D, a été décrit dans la proposition « High level description for ITU-T wideband (7 kHz) ATCELP speech coding algorithm of Deutsche Telekom, Aachen University of Technology (RWTH) and France Telecom (CNET) », delayed contribution COM 16-129/130, ITU Study Group 16, Q.20, Genève, Janvier 1998. La structure de ce codeur perceptuel est illustrée en Fig. 2. Les trames audio à coder $x(n)$ font tout d'abord l'objet d'une transformée en cosinus discrète modifiée (TCDM) dans l'unité 200 prévue pour fournir les coefficients $y(k)$ de cette transformée. Le codeur comprend également un détecteur de voisement 210 qui détermine si la trame d'entrée est voisée ou non et délivre une information binaire de voisement $v$. Il comporte aussi un détecteur de tonalité 220 qui détermine à partir des coefficients de transformée délivrés par l'unité 200 si la trame d'entrée est tonale ou non et délivre une information binaire de tonalité $t$. Une unité de masquage 230 reçoit les coefficients de transformée $y(k)$, calcule une courbe de masquage et délivre pour chaque coefficient une information de masquage suivant qu'il est supérieur ou non au seuil de masquage . Sur la base de cette information de masquage ainsi que celle des informations de tonalité et de voisement, une unité 240 détermine l'énergie dans chacune des bandes $j = 1,..,M$ d'une pluralité $M$ de bandes spectrales non régulières et délivre, quantifié et codé, un signal d'enveloppe spectrale de la trame d'entrée, soit $\{e_q(j)\}, j = 1,..,M.$ Ce signal d'enveloppe est utilisé par l'unité 260 pour allouer dynamiquement un nombre de bits de quantification par sous-bande. L'unité 250 normalise chaque coefficient de transformée $y(k)$ par l'énergie $e_q(j)$ de la sous-bande à laquelle il appartient et quantifie chaque coefficient ainsi normalisé en fonction du nombre de bits alloués. La quantification utilisée peut être scalaire ou vectorielle. Les coefficients de transformée quantifiés $y_q(k)$, le signal d'enveloppe spectrale quantifié $e_q(j)$ ainsi que les informations binaires de voisement et de tonalité $v$ et $t$ sont multiplexés dans un multiplexeur 270 pour former une trame de données audio codées.

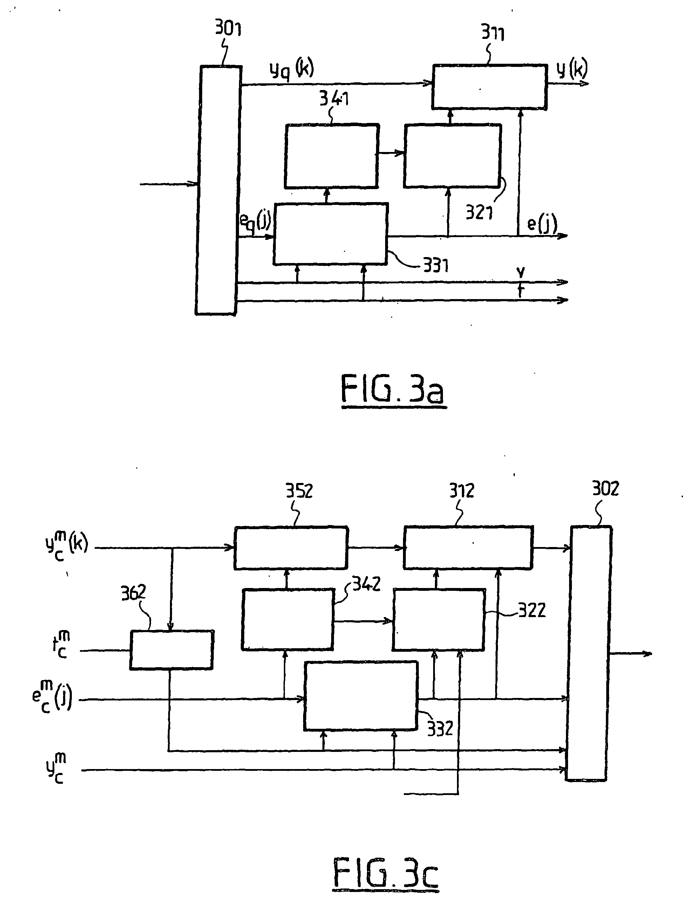

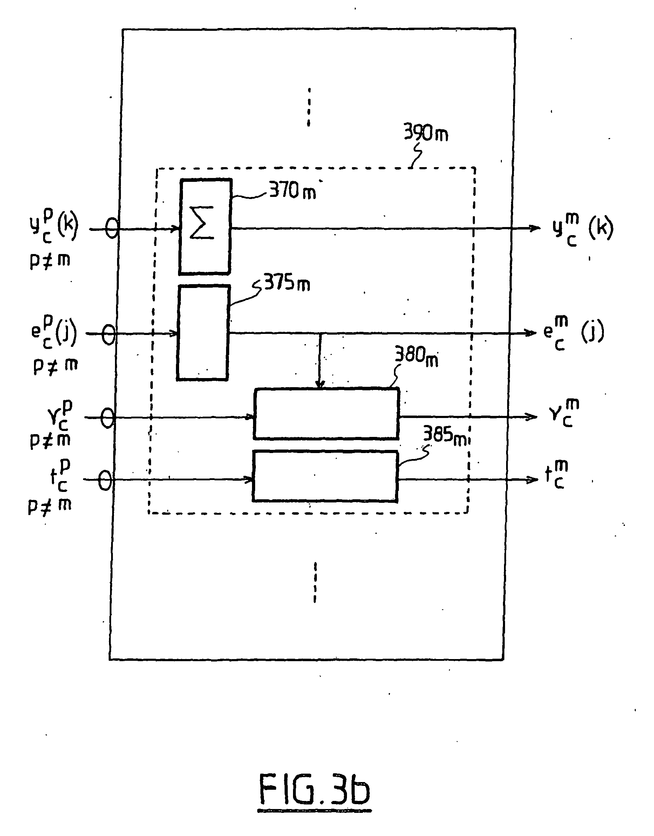

Si l'on revient maintenant au pont audio de la Fig. 1, on peut envisager de décoder en $110_p$ les trames audio codées et reconstituer les signaux audio dans le domaine temporel. La combinaison des signaux effectuée en 130 est alors également réalisée dans le domaine temporel et les signaux combinés font à nouveau l'objet d'un codage en $120_m$ selon le procédé de codage décrit ci-dessus. Cependant, un décodage partiel est préféré, seuls certains paramètres des signaux audio étant alors extraits de ces trames. La combinaison des flux d'entrée dans l'unité 130 se fait dans le domaine fréquentiel sans avoir à procéder à une reconstruction complète des signaux dans le domaine temporel. Un tel pont audio utilisant un décodage/ recodage partiel a été décrit dans la demande de brevet français n° 99 15574 déposée le 8.12.1999 au nom de la demanderesse. Les décodeurs partiels $110_p$ ont la structure indiquée en Fig. 3A et les codeurs partiels $120_m$ ont la structure illustrée en Fig. 3C. L'unité de recombinaison 130 a été représentée schématiquement en Fig. 3B.

Le décodeur partiel de la Fig. 3A comporte en entrée un démultiplexeur 301 fournissant les coefficients quantifiés $y_q(k)$, les énergies quantifiées et codées $\{e_q(j)\}$ des différentes sous-bandes, les informations binaires de voisement et de tonalité $v$ et $t$. Les valeurs des énergies sont décodées et déquantifiées dans l'unité 331 qui utilise pour ce faire les informations de voisement $v$ et de tonalité $t$. A partir des valeurs des énergies $e(j)$ ainsi obtenues, l'unité 341 détermine une courbe de masquage. L'unité 321 effectue une allocation dynamique de bits en fonction des valeurs d'énergie $e(j)$ et de la courbe de masquage fournie par l'unité 341. L'unité 311 opère alors une quantification inverse de chaque coefficient $y_q(k)$ en fonction du nombre de bits alloués puis une multiplication par l'énergie $e(j)$ de la sous-bande à laquelle il appartient. Ainsi, le décodeur partiel délivre, pour chaque trame d'entrée, les coefficients de transformée $y(k)$, les signaux d'énergie $e(j)$ des sous-bandes et les informations binaires de voisement $v$ et de tonalité $t$. Nous noterons par la suite $y^p(k)$, $e^p(j)$, $v^p$ et $t^p$ les sorties respectives du décodeur $110_p$.

L'unité de mixage 130 illustrée en Fig. 3B a pour fonction de combiner, pour une sortie d'indice $m$ donné, les signaux d'entrée d'indices $p$, tels que $p \neq m$. Plus précisément, l'unité de mixage comporte K modules $390_m$, $m = 1..K$ dont un seul a été représenté. Le module $390_m$ reçoit les sorties des décodeurs partiels $110_p$, $p \neq m$ et effectue les calculs de valeurs intermédiaires pour la sortie d'indice $m$. L'unité $370_m$ du module $390_m$ calcule l'expression de valeurs combinées $y_c^m(k)$ par $y_c^m(k)=Y(k)-y^m(k)$ où $Y(k)=\sum_{p=1}^{K} y^p(k)$. De même, l'unité $375_m$ du module $390_m$ calcule

l'expression de valeurs combinées $e_c^m(j)=\sqrt{E(j)^2-(e^m(j))^2}$ où $E(j)^2=\sum_{p=1}^{K}(e^p(j))^2$. L'unité $380_m$ effectue la combinaison des informations de voisement $v^p$ de la manière suivante : si toutes les trames d'entrée $p$, $p \neq m$ sont de même nature, voisée ou non voisée, l'information combinée de voisement, $v_c^m$ indiquera respectivement le voisement ou le non voisement. Si les trames d'entrée $p$, $p \neq m$ sont de natures différentes, l'unité $380_m$ calcule la somme des énergies des trames voisées d'une part, et la somme des énergies des trames non voisées d'autre part, et détermine l'information combinée de voisement, $v_c^m$, en comparant ces deux sommes. Enfin, l'unité $385_m$ détermine l'information combinée de tonalité $t_c^m$ de la manière suivante : si toutes les trames d'entrée $p$, $p \neq m$ ont la même information de tonalité, l'information combinée de tonalité prendra la valeur commune. En revanche, si les informations de tonalité diffèrent, la détermination de l'information combinée est reportée à la phase de codage partiel.

Le recodeur partiel illustré en Fig. 3C reçoit du module de mixage 130 les valeurs combinées $y_c^m(k)$, $e_c^m(j)$, $v_c^m$ et $t_c^m$ d'une sortie m du module de mixage. Nous omettrons l'indice $m$ pour simplifier les notations. L'information de tonalité est calculée par l'unité 362 à partir des coefficients $y_c(k)$ si elle n'a pu être déterminée par le module de mixage 130. Les valeurs des énergies $e_c^m(j)$ ainsi que l'information de voisement $v_c$ sont utilisées par une unité 332 de codage d'enveloppe spectrale pour quantifier et coder les énergies des différentes sous-bandes. Les valeurs des énergies $e_c(j)$ sont également utilisées par l'unité 342 de calcul de la courbe de masquage. Cette dernière fournit à l'unité d'allocation dynamique 322 ainsi qu'à l'unité de masquage 352 les niveaux de masquage pour les différentes sous-bandes *j*. L'unité d'allocation dynamique 322 effectue une allocation dynamique de bits de quantification pour les différentes sous-bandes en fonction des énergies $e_c(j)$ et des niveaux de masquage. Les coefficients $y_c(k)$ non masqués par l'unité de masquage 352 sont quantifiés par l'unité de re-quantification 312 en fonction du nombre de bits alloués aux différentes sous-bandes. Les coefficients re-quantifiés, les valeurs quantifiées des énergies ainsi que les informations de voisement et de tonalité sont ensuite multiplexés par le multiplexeur 302 en des trames de données audio recodées.

Nous décrirons maintenant un autre exemple de dispositif de traitement multi-flux à savoir un terminal audio multi-flux pouvant servir à un système de téléconférence à architecture centralisée avec pont audio à multiplexage ou bien à un système de téléconférence à architecture maillée (dans une architecture maillée tous les terminaux audio sont reliés point à point).

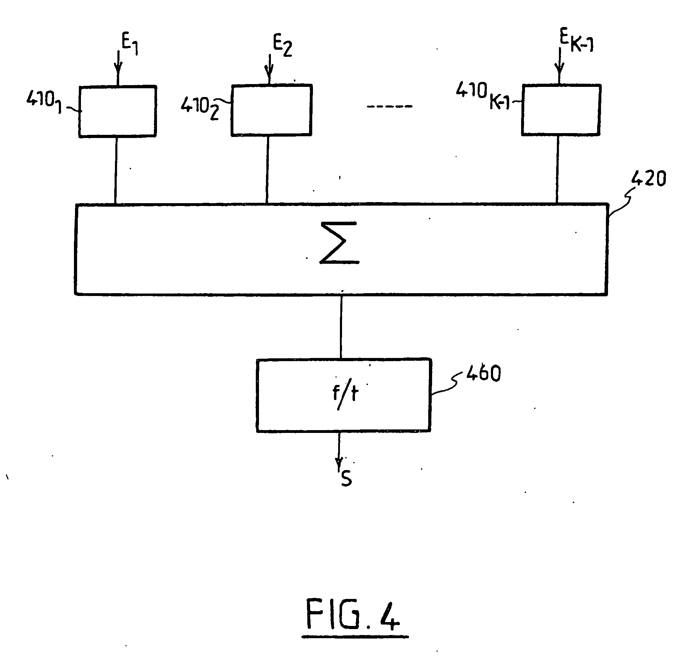

La Fig. 4 représente un terminal audio multi-flux. Il comprend K-1 entrées où K est le nombre total de terminaux. Chaque entrée reçoit un flux audio sous la forme de trames de données audio codées. De manière classique, les flux sont décodés dans des décodeurs $410_1,..,410_{K-1}$ avant d'être sommés. Si le codage utilisé est un codage par transformée comme le codage perceptuel du type décrit plus haut, il est plus avantageux de procéder dans les décodeurs $410_1,..,410_{K-1}$ à un décodage partiel, d'effectuer en 420 la sommation dans le domaine fréquentiel puis la transformation fréquence/temps en 460 sur le signal sommé. On évite ainsi une transformation fréquence/temps sur chacun des signaux.

Comme déjà évoqué plus haut, afin de remédier au problème de discontinuités dans les flux audio, les dispositifs de traitement multi-flux peuvent, soit régénérer les données manquantes au prix d'une complexité élevée, soit ne pas régénérer ces données en acceptant en contrepartie une dégradation sensible du signal restitué.

La présente invention a pour but de proposer un dispositif multi-flux audio apte à corriger les discontinuités, au prix d'une faible complexité tout en garantissant une qualité de restitution élevée.

A cette fin, l'invention telle que revendiquée dans les revendications 1, 7, 8 et 13, est définie par une méthode de traitement de signal audio produisant au moins un flux audio de sortie à partir d'une pluralité de flux audio d'entrée, l'un au moins des flux audio d'entrée, dit premier flux, pouvant présenter des données manquantes, ladite méthode comprenant une étape de décision de régénération d'au moins une partie des données manquantes dudit premier flux à partir d'au moins une caractéristique d'au moins un second flux audio d'entrée.

Avantageusement, ladite caractéristique est une caractéristique perceptuelle, par exemple un niveau de masquage.

Selon un mode de réalisation, après avoir déterminé pour une bande spectrale audio donnée un niveau de masquage induit par ledit second flux dans ladite bande, la décision de régénérer les données manquantes dans ladite bande est prise en fonction de la puissance estimée du premier flux dans ladite bande et dudit niveau de masquage.

Si les données manquantes du premier flux sont dues à un silence d'émission, lesdites données ne sont pas régénérées si les flux d'entrée autres que le premier flux n'ont pas de données manquantes ou si leurs données manquantes non dues à un silence d'émission ont été régénérées.

Si les données manquantes du premier flux sont dues à un silence d'émission et si les autres flux possèdent également des données manquantes dues à un silence d'émission, la décision de régénération des données manquantes du premier flux est prise en fonction de la puissance estimée du premier flux dans ladite bande et d'un niveau de masquage dans cette bande. Les données manquantes sont alors régénérées sous la forme d'un bruit de confort.

La régénération des données manquantes peut n'être effectuée que pour une bande spectrale ou plusieurs bandes spectrales prédéterminées du spectre du signal audio.

Si un premier ensemble de flux audio d'entrée présente des données manquantes, la régénération des données manquantes d'un flux dudit premier ensemble est décidée en fonction d'au moins une caractéristique d'un second ensemble de flux audio constitué de tous les flux ne présentant pas de données manquantes ou d'un troisième ensemble incluant ledit second ensemble ainsi qu'au moins un flux audio dudit premier ensemble dont les données manquantes ont été régénérées ou encore de tous les flux audio actifs.

Dans le cas où les flux audio d'entrée sont constitués d'une pluralité de trames et lorsque les trames des différents flux sont reçues de manière asynchrone, lorsqu'un premier ensemble de flux audio d'entrée présente des données manquantes, la régénération des données manquantes d'une trame courante d'un flux dudit premier ensemble est décidée en fonction d'au moins une caractéristique d'au moins une trame antérieure et/ou la trame courante ou une trame postérieure d'au moins ledit second flux audio.

L'invention est également définie par un dispositif de traitement de signal audio adapté à recevoir une pluralité de flux audio d'entrée et à fournir au moins un flux audio de sortie à partir desdits flux audio d'entrée, l'un au moins des flux audio d'entrée, dit premier flux, pouvant présenter des données manquantes, ledit dispositif comportant des moyens pour décider de la régénération ou non d'au moins une partie des données manquantes dudit premier flux à partir d'au moins une caractéristique d'au moins un second flux audio d'entrée.

L'invention est encore définie par un pont audio pour système de téléconférence, adapté à recevoir et à mixer et/ou multiplexer une pluralité de flux audio d'entrée pour fournir une pluralité de flux audio de sortie, les flux audio d'entrée pouvant présenter des données manquantes, ledit pont audio comprenant une pluralité de moyens de décodage partiel fournissant des flux de données partiellement décodées à partir des flux audio d'entrée, des moyens de décision de régénération opérant sur les flux de données partiellement décodées et décidant de la régénération ou non des données manquantes par des moyens de régénération, des moyens de recodage partiel des données partiellement décodées ou régénérées, lesdits moyens de décision étant adaptés à décider de la régénération d'au moins une partie des données manquantes d'un premier flux d'entrée à partir d'au moins une caractéristique d'au moins un second flux audio d'entrée.

Si les flux audio d'entrée sont constitués de trames de données obtenues par codage de type TCDM de signaux audio, les moyens de décodage partiel déquantifient par sous-bandes les composantes fréquentielles desdits signaux audio, les moyens de décision de régénération calculent l'énergie dans chaque sous-bande de chaque signal audio et déterminent, pour chaque sous-bande, le signal présentant la plus forte énergie et un niveau de masquage qu'il induit dans ladite sous-bande, la génération de données manquantes d'un signal audio dans ladite sous-bande résultant d'une comparaison, dite comparaison ultérieure, de l'énergie des composantes fréquentielles de ce signal dans ladite sous-bande avec ledit niveau de masquage.

Avantageusement, lesdits moyens de décision sont adaptés à déterminer également, pour chaque sous-bande, le signal présentant la seconde plus forte énergie et un second niveau de masquage induit par ce signal dans ladite sous-bande, la non régénération de données manquantes d'un signal audio dans ladite sous-bande résultant d'une comparaison préalable de l'énergie des composantes fréquentielles de ce signal dans ladite sous-bande avec ledit second niveau de masquage.

Si, pour une bande donnée, la comparaison préalable ne conclut pas à la non régénération et la comparaison ultérieure conclut à la régénération des données manquantes, ces dernières sont effectivement régénérées par les moyens de régénération et les données régénérées ne sont prises en compte que pour le ou les flux de sortie dans lequel ou lesquels le signal de plus forte puissance dans ladite sous-bande n'intervient pas.

Selon une variante, lesdits moyens de décision sont adaptés à déterminer si les données manquantes d'un flux d'entrée sont relatives à un silence d'émission et, dans l'affirmative, pour chaque flux de sortie obtenu à partir de ce flux d'entrée, à déterminer l'ensemble des flux d'entrée actifs entrant également dans la composition dudit flux de sortie et à décider de la génération d'un bruit de confort si, pour l'un des flux de sortie obtenus à partir de ce flux d'entrée, cet ensemble est vide et si, dans ce cas, le bruit de confort qui serait régénéré ne serait pas masqué par un autre bruit de confort régénéré pour un autre flux d'entrée non actif.

Enfin, l'invention est définie par un terminal audio pour système de téléconférence, adapté à recevoir et à mixer une pluralité de flux audio d'entrée pour fournir un signal audio de sortie, les flux audio d'entrée pouvant présenter des données manquantes, ledit terminal comprenant une pluralité de moyens de décodage partiel fournissant des flux de données partiellement décodées à partir des flux audio d'entrée, des moyens de décision de régénération opérant sur les flux de données partiellement décodées et décidant de la régénération ou non des données manquantes par de moyens des régénération, des moyens de sommation des données partiellement décodées ou régénérées et des moyens de transformation fréquence/temps fournissant ledit signal audio de sortie à partir des valeurs sommées fournies par lesdits moyens de sommation , lesdits moyens de décision étant adaptés à décider de la régénération d'au moins une partie des données manquantes d'un premier flux d'entrée à partir d'au moins une caractéristique d'au moins un second flux audio d'entrée.

Si les flux audio d'entrée sont constitués de trames de données obtenues par codage de type TCDM de signaux audio, les moyens de décodage partiel déquantifient par sous-bandes les composantes fréquentielles desdits signaux audio, les moyens de décision de régénération calculent l'énergie dans chaque sous-bande de chaque signal audio et déterminent, pour chaque sous-bande, le signal présentant la plus forte énergie et un niveau de masquage qu'il induit dans ladite sous-bande, la génération de données manquantes d'un signal audio dans ladite sous-bande résultant de la comparaison de l'énergie des composantes fréquentielles de ce signal dans ladite sous-bande avec ledit niveau de masquage.

Avantageusement, lesdits moyens de décision sont adaptés à déterminer si les données manquantes d'un flux d'entrée sont relatives à un silence d'émission. Dans l'affirmative, lesdits moyens de décision décident de la génération d'un bruit de confort si les autres flux d'entrée ne sont pas actifs et si, dans ce cas, le bruit de confort qui serait régénéré ne serait pas masqué par un autre bruit de confort régénéré pour un autre flux d'entrée non actif.

Les caractéristiques de l'invention mentionnées ci-dessus, ainsi que d'autres, apparaîtront plus clairement à la lecture de la description faite en relation avec les dessins joints, parmi lesquels :

La Fig. 1 représente schématiquement un pont audio de téléconférence connu de l'état de la technique ;

La Fig. 2 représente schématiquement la structure d'un codeur audio perceptuel connu de l'état de la technique ;
La Fig. 3A représente schématiquement la structure d'un décodeur partiel pouvant être utilisé dans le pont audio illustré en Fig. 1 ;
La Fig. 3B représente schématiquement un exemple de module de mixage pour le pont audio illustré en Fig. 1;

La Fig. 3C représente schématiquement un exemple de codeur partiel pour le pont audio illustré en Fig. 1;

La Fig. 4 représente schématiquement un terminal audio de téléconférence connu de l'état de la technique ;

La Fig. 5 représente schématiquement un premier mode de réalisation de l'invention ;

La Fig. 6 représente schématiquement un second mode de réalisation de l'invention.

L'idée générale à la base de l'invention est de procéder, en cas de discontinuité d'un flux audio, à la régénération des données manquantes selon un critère décisionnel. Ce critère peut être notamment un critère perceptuel fondé sur les propriétés de masquage inter-signaux ou un critère dépendant de la complexité de l'opération de régénération et des ressources opératoires au moment de la décision.

L'invention sera illustrée ci-après, de manière non limitative, par son application à un pont audio et un terminal audio de téléconférence.

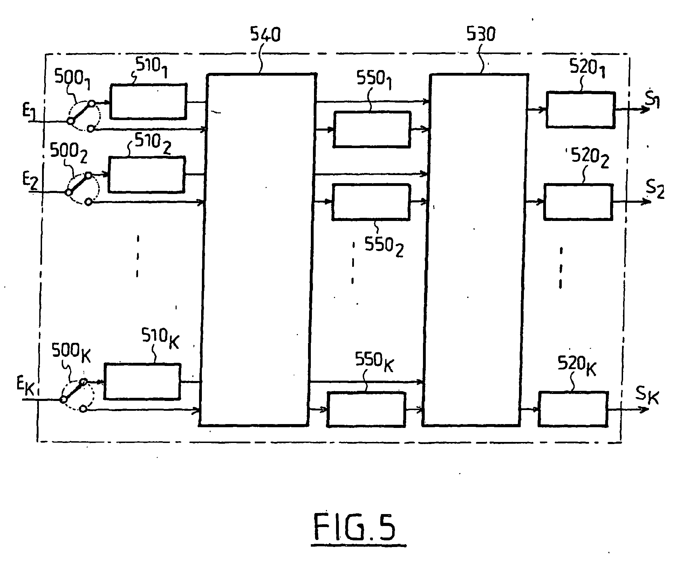

La Fig. 5 illustre un pont audio avec régénération conditionnelle des données manquantes lorsqu'un flux d'entrée présente une discontinuité.

Les entrées $E_1,...,E_K$ reçoivent chacune un flux audio constitué de trames de données audio codées. Le codage utilisé peut être un codage par transformée ou un codage par sous-bandes. Nous supposerons par exemple que les trames ont été codées par un codeur audio perceptuel TDAC tel qu'illustré en Fig. 2.

On a symbolisé en $500_1,..,500_K$ le fait que les K flux d'entrée puissent présenter des discontinuités, que celles-ci soient dues à une perte de données, une gigue ou un silence d'émission. Si le flux de $E_p$ est continu, il est dirigé vers un décodeur partiel $510_p$. Les trames partiellement décodées sont dirigées vers un module de décision de régénération conditionnelle où elles sont stockées dans des registres ou mémoires de trames. Chaque registre stocke les composantes déquantifiées $y^p(k)$, les valeurs d'énergie déquantifiées $e^p(j)$ ainsi que les informations de voisement et de tonalité $v^p$ et $t^p$ relatives à un flux $p$. Le module de décision détecte l'absence de données ou le silence d'émission et décide de régénérer ou non les données manquantes. Si le flux de $E_p$ est discontinu et que le module 540 a pris une décision de régénération, les données manquantes seront totalement ou partiellement régénérées dans l'unité de régénération $550_p$ avant que la trame soit transmise à l'unité de mixage 530. En revanche, si le flux $E_p$ est continu, la trame partiellement décodée est transmise directement à l'unité de mixage. Dans les deux cas, les trames issues des différents flux sont combinées dans le module de mixage 530 et les flux combinés sont recodés dans les codeurs partiels $520_l$ à $520_K$ pour produire les flux audio de sortie en $S_1,..,S_K$.

Nous supposerons qu'à un instant $t$ donné, un flux d'entrée d'indice $p_0$ présente une discontinuité et nous noterons $\mathcal{J}$ l'ensemble des indices des flux reçus à l'instant $t$.

Le module de décision 540 détermine tout d'abord si les données manquantes du flux $p_0$ sont des données non reçues (perdues ou excessivement retardées par la gigue) ou bien sont dues à un silence d'émission.

Dans le cas de données non reçues, le module 540 utilise un critère perceptuel pour décider de la régénération. Pour ce faire, il estime les énergies des différentes sous-bandes pour le flux d'indice $p_0$, soit $e^{P_0}(j)$, $j=1,..,M$ ainsi que les composantes $y^{P_0}(k)$. Cette estimation est avantageusement effectuée à partir de la trame d'indice $p_0$ stockée à l'instant $t-1$ ou bien, si la mémoire de trames est un buffer FIFO et que l'on tolère un retard de traitement, à partir des trames d'indice $p_0$ stockées aux instants $t$-1 et $t+1$. De manière générale, les données manquantes peuvent être estimées à partir d'une ou des trames précédentes et/ou d'une ou des trames suivantes. D'autre part, le module 540 détermine, pour chacune des bandes $j=1,..,M$ , les flux susceptibles d'être masquants : à cette fin, pour chaque bande $j$, le module 540 détermine pour quel indice $p \in \mathcal{J}$ l'énergie $e^p(j)$ est maximale. Soit $p_{max}(j)$ cet indice, $e_{max}(j)$ la valeur d'énergie maximale et $MT(j)$ le seuil de masquage induit par le signal d'indice $p_{max}(j)$, d'énergie $e_{max}(j)$ dans la bande $j$. Pour des raisons que nous verrons plus loin, le module 540 détermine également dans l'ensemble $\mathcal{J}$ l'indice du second maximum de $e^p(j)$. Soit $p_{max2}(j)$ cet indice, $e_{max2}(j)$ le second maximum et $MT_2(j)$ le seuil de masquage induit par le signal d'indice $P_{max2}(j)$, d'énergie $e_{max2}(j)$ dans la bande $j$. Le module 540 teste alors si :

$$(y^{P_0}(k))^2 < MT(j) \quad \forall k \in \text{bande } j \tag{1}$$

Si la condition (1) n'est pas réalisée, autrement dit si le signal, non reçu estimé n'est pas masqué dans la bande $j$ par l'un des signaux reçus, alors le module 540 décide de régénérer la bande $j$ du signal non reçu.

Si la condition (1) est réalisée, autrement dit si le signal non reçu est masqué dans la bande $j$ par le signal d'indice $p_{max}(j)$, il faut distinguer suivant l'indice $m$ du flux de sortie. En effet, un flux d'entrée d'indice $m$ ne participe pas au flux de sortie $m$ et ne peut donc être pris en compte pour un masquage éventuel au niveau de cette sortie. Autrement dit, pour $m \neq p_{max}(j)$, il n'y a pas lieu de régénérer la bande $j$ du flux non reçu. En revanche pour $m = p_{max}(j)$, il faut vérifier si le signal non reçu est encore masqué, c'est-à-dire déterminer si :

$$(y^{p0}(k))^2 < MT_2(j) \quad \forall k \in \text{bande } j \qquad (2)$$

Si la condition (2) n'est pas réalisée, autrement dit si le signal non reçu n'est plus masqué, la bande $j$ est régénérée. A l'inverse, le signal non reçu est encore masqué et il n'y a pas lieu de procéder à régénération.

En pratique et de manière avantageuse, le module 540 procède d'abord au test de la condition (2). Si cette dernière est vérifiée, la régénération de bande $j$ n'est pas effectuée. Dans le cas contraire, la bande $j$ du flux non reçu est régénérée et la condition (1) est testée. Si la condition (1) n'est pas vérifiée, la bande régénérée n'est alors prise en compte que pour le flux de sortie d'indice $p_{max}(j)$. A l'inverse, si la condition (1) est encore vérifiée, la bande régénérée est prise en compte pour tous les flux de sortie hormis bien entendu celui d'indice $p_0$.

Dans le cas où la discontinuité à l'instant $t$ du flux $p_0$ est due à un silence d'émission, le module 540 détermine, pour chaque indice $m \neq p_0$ de sortie, si au moins un des flux d'entrée $p$ entrant dans la composition du flux de sortie $m$ est actif, qu'il soit reçu ou régénéré. S'il existe pour tout indice $m \neq p_0$ un tel flux actif, le bruit de confort n'est pas généré. En revanche, s'il existe un indice $m \neq p_0$ tel qu'aucun des flux d'entrée entrant dans la composition du flux de sortie $m$ ne soit actif, alors la procédure de génération conditionnelle par bande exposée ci-dessus est appliquée. Autrement dit, pour chaque bande $j$, le module 540 vérifie si le bruit de confort $p_0$ est masqué par le niveau de masquage induit par un autre bruit de confort et, si tel est le cas, décide de ne pas générer le bruit de confort $p_0$ dans la bande en question. Le flux de sortie $m$ porte alors l'information de trame SID.

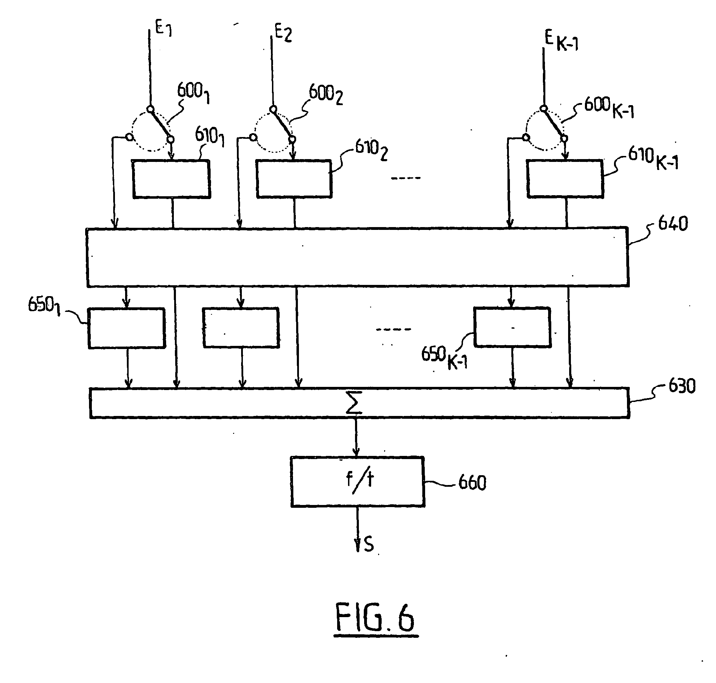

La Fig. 6 illustre un terminal audio du type représenté en Fig. 4 avec régénération conditionnelle des données manquantes lorsqu'un flux d'entrée présente une discontinuité.

Les entrées $E_1,...,E_{K-1}$ reçoivent chacune un flux audio constitué de trames de données audio codées. Le codage utilisé peut être un codage par transformée ou un codage par sous-bandes. Nous supposerons là aussi que les trames ont été codées par le codeur perceptuel tel qu'illustré en Fig. 2.

On a symbolisé en $600_1,..,600_{K-1}$ le fait que les K-1 flux d'entrée puissent présenter des discontinuités, que celles-ci soient dues à une perte, une gigue ou un silence d'émission. Si le flux de $E_p$ est continu, il est dirigé vers un décodeur partiel $610_p$. Les trames partiellement décodées sont dirigées vers un module de décision de régénération conditionnelle 640 où elles sont stockées dans des registres ou mémoires de trames. Chaque registre stocke les composantes déquantifiées $y^p(k)$, les valeurs d'énergie déquantifiées $e^p(j)$ ainsi que les informations de voisement et de tonalité $v^p$ et $t^p$ relatives à un flux $p$. Le module de décision détecte l'absence de données ou le silence d'émission et décide de régénérer ou non les données manquantes. Si le flux de $E_p$ est discontinu et que le module 640 a pris une décision de régénération, les données manquantes sont totalement ou partiellement régénérées dans l'unité de régénération $650_p$ puis la trame régénérée est transmise au sommateur 630. Après sommation des K-1 trames reçues ou régénérées, l'unité 660 effectue une transformation du domaine fréquentiel (compressé) au domaine temporel. Le signal audio résultant peut par exemple être reproduit par un haut-parleur.

Nous supposerons à nouveau qu'à un instant $t$ donné, un flux d'entrée d'indice $p_0$ présente une discontinuité et nous noterons $\mathcal{J}$ l'ensemble des indices des flux reçus à l'instant $t$.

Le module de décision 640 détermine tout d'abord si les données manquantes du flux $p_0$ sont des données non reçues (perdues ou excessivement retardées) ou bien sont dues à un silence d'émission.

Dans le cas de données non reçues, le module 640 utilise un critère perceptuel pour décider de la régénération. Pour ce faire, il estime, comme vu plus haut, les énergies des différentes sous-bandes pour le flux d'indice $p_0$, soit $e^{p0}(j)$, $j=1,..,M$ ainsi que les composantes $y^{p0}(k)$ et détermine, pour chacune les flux susceptibles d'être masquants. Pour chaque bande $j$, le module 640 détermine pour quel indice $p \in \mathcal{J}$ l'énergie $e^p(j)$ est maximale. Soit $p_{max}(j)$ cet indice, $e_{max}(j)$ la valeur d'énergie maximale et $MT(j)$ le seuil de masquage induit par le signal d'indice $p_{max}(j)$, d'énergie $e_{max}(j)$ dans la bande $j$. Le module 640 teste alors si :

$$(y^{p0}(k))^2 < MT(j) \quad \forall k \in \text{bande } j \qquad (1')$$

Si la condition (1') n'est pas réalisée, autrement dit si le signal non reçu estimé n'est pas masqué dans la bande $j$ par l'un des signaux reçus, alors le module 640 décide de régénérer la bande $j$ du signal non reçu.

Dans le cas où la discontinuité à l'instant $t$ du flux $p_0$ est due à un silence d'émission, le module 640 détermine si au moins un des autres flux d'entrée $p$ est actif, qu'il soit effectivement reçu ou régénéré. S'il existe un tel flux actif, le bruit de confort du flux $p_0$ n'est pas généré. En revanche, si aucun flux d'entrée n'est actif, la procédure de génération conditionnelle par bande exposée ci-dessus est appliquée aux bruits de confort. Autrement dit, pour chaque bande $j$, le module 640 vérifie si le silence de confort $p_0$ est masqué par le niveau de masquage induit par un autre silence de confort et, si tel est le cas, décide de ne pas générer le silence de confort $p_0$ dans la bande en question. Le signal reproduit en 660 est alors un bruit de confort.

Bien que nous ayons précédemment supposé que le codage audio était du type à transformée TCDM, l'invention s'applique de manière générale à tout type de codage et notamment à un codage perceptuel par sous-bandes, par exemple tel que défini dans UIT-T G.722.1. L'invention s'applique également à un codage CELP (Code Excited Linear Predictive), par exemple à un codage CELP perceptuel.

On notera que, lorsque les flux audio ont été codés par un codage utilisant des variables d'état, les données non reçues arrivant postérieurement (gigue) à leur régénération peuvent néanmoins servir à la mise à jour de ces variables.

Enfin, dans tous les cas, on peut se borner pour des raisons de simplification de réalisation, à une régénération dans une bande réduite ou dans certaines sous-bandes du spectre seulement. Par exemple, bien que les signaux reçus présentent un spectre élargi [0-8kHz], la régénération pourra n'avoir lieu que dans la bande réduite [0-4kHz]. Si la régénération n'est effectuée que dans certaines sous-bandes seulement, on utilisera avantageusement la découpe en bandes non régulières utilisée pour le codage.

## Revendications

1. Méthode de traitement de signal audio produisant au moins un flux audio de sortie à partir d'une pluralité de flux audio d'entrée, l'un au moins des flux audio d'entrée, dit premier flux, pouvant présenter des données manquantes, **caractérisée en ce qu'**elle comprend une étape de décision pour la régénération d'au moins une partie des données qui sont manquantes dans ledit premier flux, ladite étape consistant, pour une bande spectrale audio donnée, à déterminer un niveau de masquage induit par un second flux dans ladite bande et à prendre ladite décision de régénérer les données manquantes dans ladite bande en fonction de la puissance estimée du premier flux dans ladite bande et dudit niveau de masquage.

2. Méthode de traitement de signal audio selon la revendication 1, **caractérisée en ce que**, si les données manquantes du premier flux sont dues à un silence d'émission et que les autres flux possèdent également des données manquantes dues à un silence d'émission, la décision de régénération des données manquantes du premier flux est prise en fonction de la puissance estimée du premier flux dans ladite bande et d'un niveau de masquage dans cette bande.

3. Méthode de traitement de signal audio selon la revendication 1 ou 2, **caractérisée en ce que** les données manquantes sont régénérées sous la forme d'un bruit de confort.

4. Méthode de traitement de signal audio selon l'une des revendications précédentes, **caractérisée en ce que** la régénération des données manquantes n'est effectuée que pour une bande spectrale ou plusieurs bandes spectrales prédéterminées du spectre du signal audio.

5. Méthode de traitement de signal audio selon l'une des revendications précédentes, **caractérisée en ce que**, un premier ensemble de flux audio d'entrée pouvant présenter des données manquantes, la régénération des données manquantes d'un flux dudit premier ensemble est décidée en fonction d'au moins une caractéristique d'un second ensemble de flux audio constitué de tous les flux ne présentant pas de données manquantes ou d'un troisième ensemble incluant ledit second ensemble ainsi qu'au moins un flux audio dudit premier ensemble dont les données manquantes ont été régénérées ou encore de tous les flux audio actifs.

6. Méthode de traitement de signal audio selon l'une des revendications 1 à 5, **caractérisée en ce que**, chaque flux audio d'entrée étant constitué d'une pluralité de trames, les trames des différents flux pouvant être reçues de manière asynchrone, un premier ensemble de flux audio d'entrée pouvant présenter des données manquantes, la régénération des données manquantes d'une trame courante d'un flux dudit premier ensemble est décidée en fonction d'au moins une caractéristique d'au moins une trame antérieure et/ou la trame courante ou une trame postérieure d'au moins ledit second flux audio.

7. Dispositif de traitement de signal audio adapté à recevoir une pluralité de flux audio d'entrée et à fournir au moins un flux audio de sortie à partir desdits flux audio d'entrée, l'un au moins des flux audio d'entrée, dit premier flux, pouvant présenter des données manquantes, **caractérisé en ce qu'**il comporte des moyens de décision pour décider de la régénération ou non d'au moins une partie des données manquantes dudit premier flux, la décision prise par lesdits moyens de décision étant conforme à la méthode de la revendication 1.

8. Pont audio pour système de téléconférence, adapté à recevoir et à mixer et/ou multiplexer une pluralité de flux audio d'entrée pour fournir une pluralité de flux audio de sortie, les flux audio d'entrée pouvant présenter des données manquantes, **caractérisé en ce qu'**il comprend une pluralité de moyens de décodage partiel $(510_p)$ fournissant des flux de données partiellement décodées à partir des flux audio d'entrée, des moyens (540) de décision de régénération opérant sur les flux de données partiellement décodées et décidant de la régénération ou non des données manquantes par des moyens de régénération $(550_p)$, des moyens $(520_p)$ de recodage partiel des données partiellement décodées ou régénérées, lesdits moyens de décision étant adaptés à, pour une bande spectrale audio donnée, déterminer un niveau de masquage induit par un second flux dans ladite bande et à décider de la régénération des données manquantes dans ladite bande d'un premier flux d'entrée en fonction de la puissance estimée du premier flux dans ladite bande et dudit niveau de masquage.

9. Pont audio selon la revendication 8, **caractérisé en ce que**, les flux audio d'entrée étant constitués de trames de données obtenues par codage de type TCDM de signaux audio, les moyens de décodage partiel déquantifient par sous-bandes les composantes fréquentielles desdits signaux audio, les moyens de décision de régénération calculent l'énergie dans chaque sous-bande de chaque signal audio, déterminent, pour chaque sous-bande, le signal présentant la plus forte énergie et un niveau de masquage qu'il induit dans ladite sous-bande, la génération de données manquantes d'un signal audio dans ladite sous-bande résultant d'une comparaison, dite comparaison ultérieure, de l'énergie des composantes fréquentielles de ce signal dans ladite sous-bande avec ledit niveau de masquage.

10. Pont audio selon la revendication 9 **caractérisé en ce que** lesdits moyens de décision sont adaptés à déterminer également, pour chaque sous-bande, le signal présentant la seconde plus forte énergie et un second niveau de masquage induit par ce signal dans ladite sous-bande, la non régénération de données manquantes d'un signal audio dans ladite sous-bande résultant d'une comparaison préalable de l'énergie des composantes fréquentielles de ce signal dans ladite sous-bande avec ledit second niveau de masquage.

11. Pont audio selon la revendication 10, **caractérisé en ce que**, pour une bande donnée, si la comparaison préalable ne conclut pas à la non régénération et la comparaison ultérieure conclut à la régénération des données manquantes, ces dernières sont effectivement régénérées par les moyens de régénération et les données régénérées ne sont prises en compte que pour le ou les flux de sortie dans lequel ou lesquels le signal de plus forte puissance dans ladite sous-bande n'intervient pas.

12. Pont audio selon l'une des revendications 8 à 11, **caractérisé en ce que** lesdits moyens de décision sont adaptés à déterminer si les données manquantes d'un flux d'entrée sont relatives à un silence d'émission et, dans l'affirmative, pour chaque flux de sortie obtenu à partir de ce flux d'entrée, à déterminer l'ensemble des flux d'entrée actifs entrant également dans la composition dudit flux de sortie et à décider de la génération d'un bruit de confort si, pour l'un des flux de sortie obtenus à partir de ce flux d'entrée, cet ensemble est vide et si, dans ce cas, le bruit de confort qui serait régénéré ne serait pas masqué par un autre bruit de confort régénéré pour un autre flux d'entrée non actif.

13. Terminal audio pour système de téléconférence, adapté à recevoir et à mixer une pluralité de flux audio d'entrée pour fournir un signal audio de sortie, les flux audio d'entrée pouvant présenter des données manquantes, **caractérisé en ce qu'**il comprend une pluralité de moyens de décodage partiel $(610_p)$ fournissant des flux de données partiellement décodées à partir des flux audio d'entrée, des moyens (640) de décision de régénération opérant sur les flux de données partiellement décodées et décidant de la régénération ou non des données manquantes par des moyens de régénération $(650_p)$, des moyens de sommation (630) des données partiellement décodées ou régénérées et des moyens de transformation fréquence/temps (660) fournissant ledit signal audio de sortie à partir des valeurs sommées fournies par lesdits moyens de sommation, lesdits moyens de décision étant adaptés à, pour une bande spectrale audio donnée, déterminer un niveau de masquage induit par un second flux dans ladite bande et à décider de la régénération des données manquantes dans ladite bande d'un premier flux d'entrée en fonction de la puissance estimée du premier flux dans ladite bande et dudit niveau de masquage.

14. Terminal audio selon la revendication 13, **caractérisé en ce que**, les flux audio d'entrée étant constitués de trames de données obtenues par codage de type TCDM de signaux audio, les moyens de décodage partiel déquantifient par sous-bandes les composantes fréquentielles desdits signaux audio, les moyens de décision de régénération calculent l'énergie dans chaque sous-bande de chaque signal audio et déterminent, pour chaque sous-bande, le signal présentant la plus forte énergie et un niveau de masquage qu'il induit dans ladite sous-bande, la génération de données manquantes d'un signal audio dans ladite sous-bande résultant de la comparaison de l'énergie des composantes fréquentielles de ce signal dans ladite sous-bande avec ledit niveau de masquage.

15. Terminal audio selon la revendication 14, **caractérisé en ce que** lesdits moyens de décision sont adaptés à déterminer si les données manquantes d'un flux d'entrée sont relatives à un silence d'émission et dans l'affirmative, à décider de la génération d'un bruit de confort si les autres flux d'entrée ne sont pas actifs et si, dans ce cas, le bruit de confort qui serait régénéré ne serait pas masqué par un autre bruit de confort régénéré pour un autre flux d'entrée non actif.

**Claims**

1. Audio signal processing method producing at least one output audio stream from a plurality of input audio streams, at least one of the input audio streams, called first stream, possibly presenting missing data, **characterized in that** it comprises a decision step for the regeneration of at least part of the data that is missing from said first stream, said step consisting, for a given audio spectral band, in determining a masking level induced by a second stream in said band and in taking said decision to regenerate the missing data in said band according to the estimated power of the first stream in said band and said masking level.

2. Audio signal processing method according to Claim 1, **characterized in that**, if the missing data from the first stream is due to a transmission silence and the other streams also have missing data due to a transmission silence, the decision to regenerate the missing data of the first stream is taken according to the estimated power of the first stream in said band and a masking level in this band.

3. Audio signal processing method according to Claim 1 or 2, **characterized in that** the missing data is regenerated in the form of a comfort noise.

4. Audio signal processing method according to one of the preceding claims, **characterized in that** the regeneration of the missing data is performed only for a spectral band or several predetermined spectral bands of the spectrum of the audio signal.

5. Audio signal processing method according to one of the preceding claims, **characterized in that**, a first set of input audio streams possibly presenting missing data, the regeneration of the missing data of a stream of said first set is decided according to at least one characteristic of a second set of audio streams consisting of all the streams not presenting missing data or a third set including said second set and at least one audio stream of said first set for which the missing data has been regenerated or even all the active audio streams.

6. Audio signal processing method according to one of Claims 1 to 5, **characterized in that**, each input audio stream consisting of a plurality of frames, the frames of the different streams being able to be received asynchronously, a first set of input audio streams possibly presenting missing data, the regeneration of the missing data of a current frame of a stream of said first set is decided according to at least one characteristic of at least one previous frame and/or the current frame or one subsequent frame of at least said second audio stream.

7. Audio signal processing device suitable for receiving a plurality of input audio streams and supplying at least one output audio stream from said input audio streams, at least one of the input audio streams, called first stream, possibly presenting missing data, **characterized in that** it comprises decision means for deciding whether or not to regenerate at least a part of the missing data of said first stream, the decision taken by said decision means being in accordance with the method of Claim 1.

8. Audio bridge for teleconferencing system, suitable for receiving and mixing and/or multiplexing a plurality of input audio streams to supply a plurality of output audio streams, the input audio streams possibly presenting missing data, **characterized in that** it comprises a plurality of partial decoding means (510p) providing partially decoded data streams from the input audio streams, regeneration decision means (540) working on the partially decoded data streams and deciding whether or not to regenerate the missing data by regeneration means (550p), means (520p) of partially recoding the partially decoded or regenerated data, said decision means being suitable, for a given audio spectral band, for determining a masking level induced by a second stream in said band and for deciding to regenerate the missing data in said band of a first input stream according to the estimated power of the first stream in said band and said masking level.

9. Audio bridge according to Claim 8, **characterized in that**, the input audio streams consisting of data frames obtained by MDCT-type encoding of audio signals, the partial decoding means dequantize in subbands the frequency components of said audio signals, the regeneration decision means calculate the energy in each subband of each audio signal, determine, for each subband, the signal presenting the highest energy and a masking level that it induces in said subband, the generation of missing data of an audio signal in said subband resulting from a comparison, called subsequent comparison, of the energy of the frequency components of this signal in said subband with said masking level.

10. Audio bridge according to Claim 9, **characterized in that** said decision means are suitable for also determining, for each subband, the signal presenting the second highest energy and a second masking level induced by this signal in said subband, the non-regeneration of missing data of an audio signal in said subband resulting from a prior comparison of the energy of the frequency components of this signal in said subband with said second masking level.

11. Audio bridge according to Claim 10, **characterized in that**, for a given band, if the prior comparison does not conclude in the non-regeneration and the subsequent comparison concludes in the regeneration of the missing data, the latter is actually regenerated by the regeneration means and the regenerated data is taken into account only for the output stream or streams in which the signal with the strongest power in said subband does not occur.

12. Audio bridge according to one of Claims 8 to 11, **characterized in that** said decision means are suitable for determining whether the missing data of an input stream relates to a transmission silence and, if it does, for each output stream obtained from this input stream, for determining the set of active input streams also involved in the composition of said output stream and for deciding to generate a comfort noise if, for one of the output streams obtained from this input stream, this set is empty and if, in this case, the comfort noise that would be regenerated would not be masked by another comfort noise regenerated for another non-active input stream.

13. Audio terminal for teleconferencing system, suitable for receiving and for mixing a plurality of input audio streams to supply an output audio signal, the input audio streams possibly presenting missing data, **characterized in that** it comprises a plurality of partial decoding means (610p) providing partially decoded data streams from the input audio streams, regeneration decision means (640) working on the partially decoded data streams and deciding whether or not to regenerate the missing data by regeneration means (650p), means (630) of aggregating the partially decoded or regenerated data and frequency/time transformation means (660) providing said output audio signal from the aggregate values supplied by said aggregating means, said decision means being suitable, for a given audio spectral band, for determining a masking level induced by a second stream in said band and for deciding to regenerate the missing data in said band of a first input stream according to the estimated power of the first stream in said band and said masking level.

14. Audio terminal according to Claim 13, **characterized in that**, the input audio streams consisting of data frames obtained by MDCT-type encoding of audio signals, the partial decoding means dequantize in subbands the frequency components of said audio signals, the regeneration decision means calculate the energy in each subband of each audio signal and determine, for each subband, the signal presenting the highest energy and a masking level that it induces in said subband, the generation of missing data of an audio signal in said subband resulting from the comparison of the energy of the frequency components of this signal in said subband with said masking level.

15. Audio terminal according to Claim 14, **characterized in that** said decision means are suitable for determining whether the missing data of an input stream relates to a transmission silence and, if it does, for deciding to generate a comfort noise if the other input streams are not active and whether, in this case, the comfort noise that would be regenerated would not be masked by another comfort noise regenerated for another non-active input stream.

**Patentansprüche**

1. Verfahren zur Verarbeitung eines Audiosignals, das mindestens einen Ausgangsaudiofluss ausgehend von mehreren Eingangsaudioflüssen erzeugt, wobei mindestens einer der Eingangsaudioflüsse, erster Fluss genannt, fehlende Daten aufweisen kann, **dadurch gekennzeichnet, dass** es einen Entscheidungsschritt für die Regenerierung mindestens eines Teils der Daten aufweist, die im ersten Fluss fehlen, wobei der Schritt für ein gegebenes Audio-Spektralband darin besteht, einen Verdeckungspegel zu bestimmen, der von einem zweiten Fluss in das Band induziert wird, und die Entscheidung zur Regenerierung der fehlenden Daten im Band in Abhängigkeit von der geschätzten Leistung des ersten Flusses im Band und des Verdeckungspegels zu treffen.

2. Verfahren zur Verarbeitung eines Audiosignals nach Anspruch 1, **dadurch gekennzeichnet, dass**, wenn die fehlenden Daten des ersten Flusses durch eine Sendepause verursacht werden und die anderen Flüsse ebenfalls fehlende Daten aufgrund einer Sendepause besitzen, die Entscheidung der Regenerierung der fehlenden Daten des ersten Flusses in Abhängigkeit von der geschätzten Leistung des ersten Flusses im Band und von einem Verdeckungspegel in diesem Band getroffen wird.

3. Verfahren zur Verarbeitung eines Audiosignals nach Anspruch 1 oder 2, **dadurch gekennzeichnet, dass** die fehlenden Daten in Form eines Komfortrauschens regeneriert werden.

4. Verfahren zur Verarbeitung eines Audiosignals nach einem der vorhergehenden Ansprüche, **dadurch gekennzeichnet, dass** die Regenerierung der fehlenden Daten nur für ein Spektralband oder für mehrere vorbestimmte Spektralbänder des Spektrums des Audiosignals durchgeführt wird.

5. Verfahren zur Verarbeitung eines Audiosignals nach einem der vorhergehenden Ansprüche, **dadurch gekennzeichnet, dass**, da eine erste Einheit von Eingangsaudioflüssen fehlende Daten aufweisen kann, die Regenerierung der fehlenden Daten eines Flusses der ersten Einheit in Abhängigkeit von mindestens einem Merkmal einer zweiten Einheit von Audioflüssen, die aus allen Flüssen besteht, die keine fehlenden Daten aufweisen, oder einer dritten Einheit, die die zweite Einheit sowie mindestens einen Audiofluss der ersten Einheit enthält, dessen fehlende Daten regeneriert wurden, oder auch aller aktiven Audioflüsse veranlasst wird.

6. Verfahren zur Verarbeitung eines Audiosignals nach einem der Ansprüche 1 bis 5, **dadurch gekennzeichnet, dass**, da jeder Eingangsaudiofluss aus mehreren Rahmen besteht, wobei die Rahmen der verschiedenen Flüsse asynchron empfangen werden können, wobei eine erste Einheit von Eingangsaudioflüssen fehlende Daten aufweisen kann, die Regenerierung der fehlenden Daten eines laufenden Rahmens eines Flusses der ersten Einheit in Abhängigkeit von mindestens einem Merkmal mindestens eines früheren Rahmens und/oder des laufenden Rahmens oder eines späteren Rahmens mindestens des zweiten Audioflusses veranlasst wird.

7. Vorrichtung zur Verarbeitung eines Audiosignals, die ausgelegt ist, um mehrere Eingangsaudioflüsse zu empfangen und um mindestens einen Ausgangsaudiofluss ausgehend von den Eingangsaudioflüssen zu liefern, wobei mindestens einer der Eingangsaudioflüsse, erster Fluss genannt, fehlende Daten aufweisen kann, **dadurch gekennzeichnet, dass** sie Entscheidungsmittel aufweist, um über die Regenerierung oder nicht mindestens eines Teils der fehlenden Daten des ersten Flusses zu entscheiden, wobei die von den Entscheidungsmitteln getroffene Entscheidung dem Verfahren des Anspruchs 1 entspricht.

8. Audiobrücke für ein Telekonferenzsystem, die ausgelegt ist, um mehrere Eingangsaudioflüsse zu empfangen und zu mischen und/oder zu multiplexieren, um mehrere Ausgangsaudioflüsse zu liefern, wobei die Eingangsaudioflüsse fehlende Daten aufweisen können, **dadurch gekennzeichnet, dass** sie mehrere Teildecodierungsmittel (510p), die teilweise decodierte Datenflüsse ausgehend von den Eingangsaudioflüssen liefern, Mittel (540) zur Entscheidung über die Regenerierung, die an den teilweise decodierten Datenflüssen wirken und über die Regenerierung oder nicht der fehlenden Daten durch Regenerierungsmittel (550p) entscheiden, Mittel (520p) zur teilweisen Neucodierung der teilweise decodierten oder regenerierten Daten aufweist, wobei die Entscheidungsmittel ausgelegt sind, um für ein gegebenes Audio-Spektralband einen Verdeckungspegel zu bestimmen, der von einem zweiten Fluss in das Band induziert wird, und über die Regenerierung der fehlenden Daten eines ersten Eingangsflusses in dem Band in Abhängigkeit von der geschätzten Leistung des ersten Flusses in dem Band und des Verdeckungspegels zu bestimmen.

9. Audiobrücke nach Anspruch 8, **dadurch gekennzeichnet, dass**, da die Eingangsaudioflüsse aus Datenrahmen bestehen, die durch Codierung vom Typ TCDM von Audiosignalen erhalten werden, die Mittel zur teilweisen Decodierung die Frequenzkomponenten der Audiosignale in Subbänder dequantisieren, die Regenerierungs-Entscheidungsmittel die Energie in jedem Subband jedes Audiosignals berechnen, für jedes Subband das Signal mit der größten Energie und einen Verdeckungspegel bestimmen, den es in das Subband induziert, wobei die Erzeugung von fehlenden Daten eines Audiosignals in dem Subband aus einem Vergleich, späterer Vergleich genannt, der Energie der Frequenzkomponenten dieses Signals in dem Subband mit dem Verdeckungspegel resultiert.

**10.** Audiobrücke nach Anspruch 9, **dadurch gekennzeichnet, dass** die Entscheidungsmittel ausgelegt sind, um ebenfalls für jedes Subband das Signal, das die zweitstärkste Energie aufweist, und einen zweiten Verdeckungspegel zu bestimmen, der von diesem Signal in das Subband induziert wird, wobei die Nicht-Regenerierung von fehlenden Daten eines Audiosignals in dem Subband aus einem vorhergehenden Vergleich der Energie der Frequenzkomponenten dieses Signals in dem Subband mit dem zweiten Verdeckungspegel resultiert.

**11.** Audiobrücke nach Anspruch 10, **dadurch gekennzeichnet, dass** für ein gegebenes Band, wenn der vorhergehende Vergleich nicht auf die Nicht-Regenerierung schließt und der spätere Vergleich auf die Regenerierung der fehlenden Daten schließt, diese letzteren tatsächlich von den Regenerierungsmitteln regeneriert werden und die regenerierten Daten nur für den oder die Ausgangsflüsse berücksichtigt werden, in dem oder denen das Signal stärkster Leistung im Subband nicht interveniert.

**12.** Audiobrücke nach einem der Ansprüche 8 bis 11, **dadurch gekennzeichnet, dass** die Entscheidungsmittel ausgelegt sind zu bestimmen, ob die fehlenden Daten eines Eingangsflusses sich auf eine Sendepause beziehen, und wenn dies der Fall ist, für jeden ausgehend von diesem Eingangsfluss erhaltenen Ausgangsfluss die Einheit der aktiven Eingangsflüsse zu bestimmen, die ebenfalls zur Zusammensetzung des Ausgangsflusses gehören, und die Erzeugung eines Komfortrauschens zu veranlassen, wenn für einen der ausgehend von diesem Eingangsfluss erhaltenen Ausgangsflüsse diese Einheit leer ist, und wenn in diesem Fall das Komfortrauschen, das regeneriert würde, nicht von einem anderen Komfortrauschen verdeckt würde, das für einen anderen nicht aktiven Eingangsfluss regeneriert wird.

**13.** Audioterminal für ein Telekonferenzsystem, das ausgelegt ist, um mehrere Eingangsaudioflüsse zu empfangen und zu mischen, um ein Ausgangsaudiosignal zu liefern, wobei die Eingangsaudioflüsse fehlende Daten aufweisen können, **dadurch gekennzeichnet, dass** es mehrere Mittel (610p) zur teilweisen Decodierung, die teilweise decodierte Datenflüsse ausgehend von den Eingangsaudioflüssen liefern, Mittel (640) zur Entscheidung über die Regenerierung, die auf die teilweise decodierten Datenflüssen wirken und über die Regenerierung oder nicht der fehlenden Daten durch Regenerierungsmittel ($650_p$) entscheiden, Summiermittel (630) der teilweise decodierten oder regenerierten Daten und Mittel zur Frequenz/Zeit-Umwandlung (660) aufweist, die das Ausgangsaudiosignal ausgehend von den summierten Werten liefern, die von den Summiermitteln geliefert werden, wobei die Entscheidungsmittel ausgelegt sind, um für ein gegebenes Audio-Spektralband einen Verdeckungspegel zu bestimmen, der von einem zweiten Fluss in das Band induziert wird, und um über die Regenerierung der fehlenden Daten eines ersten Eingangsflusses in dem Band in Abhängigkeit von der geschätzten Leistung des ersten Flusses in dem Band und dem Verdeckungspegel zu entscheiden.

**14.** Audioterminal nach Anspruch 13, **dadurch gekennzeichnet, dass**, da die Eingangsdatenflüsse aus Datenrahmen bestehen, die durch Codierung vom Typ TCDM von Audiosignalen erhalten werden, die Mittel zur teilweisen Decodierung die Frequenzkomponenten der Audiosignale in Subbänder dequantisieren, die Regenerierungs-Entscheidungsmittel die Energie in jedem Subband jedes Audiosignals berechnen und für jedes Subband das Signal, das die stärkste Energie aufweist, und einen Verdeckungspegel bestimmen, den es in das Subband induziert, wobei die Erzeugung von fehlenden Daten eines Audiosignals in dem Subband aus dem Vergleich der Energie der Frequenzkomponenten dieses Signals in dem Subband mit dem Verdeckungspegel resultiert.

**15.** Audioterminal nach Anspruch 14, **dadurch gekennzeichnet, dass** die Entscheidungsmittel ausgelegt sind, zu bestimmen, ob die fehlenden Daten eines Eingangsflusses sich auf eine Sendepause beziehen, und wenn dies der Fall ist, die Erzeugung eines Komfortrauschens zu veranlassen, wenn die anderen Eingangsflüsse nicht aktiv sind, und wenn in diesem Fall das Komfortrauschen, das regeneriert würde, nicht von einem anderen Komfortrauschen verdeckt würde, das für einen anderen nicht aktiven Eingangsfluss regeneriert wird.

$$\underline{\text{FIG.1}}$$

FIG.2

FIG.3a

FIG.3c

FIG.3b

$$\mathrm{FIG.4}$$

FIG.5

FIG.6

EP 1 356 455 B1

**EP 1 356 455 B1**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- JP 11284582 B
- FR 9915574
- FR 8121999

**Littérature non-brevet citée dans la description**

- **C. PERKINS et al.** A survey of packet loss recovery techniques for streaming audio. *IEEE Network,* Septembre 1998
- **YAO et al.** Experiment with error-correcting RTP gateways. *IEEE 3rd Workshop on Multimedia Signal Processing,* 15-20